# EUROPEAN PATENT SPECIFICATION

(11) **EP 0 809 009 B1**
(45) Date of publication and mention of the grant of the patent: **14.08.2002**
(21) Application number: 97108139.3
(22) Date of filing: 20.05.1997
(51) Int. Cl.: F02D 41/38

(54) **Apparatus for controlling diesel engine**
Gerät zur Steuerung eines Dieselmotors
Appareil de régulation pour moteur diesel

(30) Priority: 21.05.1996 JP 12578396
(43) Date of publication of application: 26.11.1997
(73) Proprietor: TOYOTA JIDOSHA KABUSHIKI KAISHA, Aichi-ken (JP)
(72) Inventor: Oikawa, Naohiko, Toyota-shi, Aichi-ken 471 (JP)
(74) Representative: Pellmann, Hans-Bernd, Dipl.-Ing.

(56) References cited:
- DE-A- 4 133 856
- US-A- 4 304 209
- US-A- 4 727 848
- PATENT ABSTRACTS OF JAPAN vol. 012, no. 400 (M-756), 24 October 1988 & JP 63 143343 A (NIPPON DENSO CO LTD), 15 June 1988

## Description

The present invention relates generally to a control apparatus for a diesel engine. More particularly, the present invention relates to a control apparatus including a mechanism for controlling the amount of intake air that is supplied to the diesel engine via an intake passage.

Document US 4 727 848 discloses a device for and a method of supplying gases into a combustion space of a self-igniting internal combustion engine, wherein the flow of returned exhaust gas and the flow of sucked-in air is controlled by respective valves. An electronic control circuit reads the variables of the engine under operation and generates control signals indicative of the time-dependent operational variables of the engine, particularly a quantity of supplied fuel and a quantity of sucked-in air. The corresponding valves are activated on the basis of the control signals for setting the flow of exhaust gases and sucked-in air, respectively, according to the sensed operating condition of the engine.

In diesel engines, an excessive amount of fuel in the combustion chambers, in other words, an amount of fuel that is not properly proportioned with the amount of air present, increases fuel solid material in the exhaust gas. As a result, excessive black smoke is exhausted from the engine. In diesel engines having an exhaust gas recirculation (EGR) system, a delay in the response of the EGR system generates excessive black smoke. Several techniques have been devised for reducing black smoke from diesel engines. Japanese Unexamined Patent Publication No. 63-143343 discloses such a control apparatus. Fig. 14 is a diagrammatic cross-sectional view illustrating a diesel engine 81 having the control apparatus of the publication.

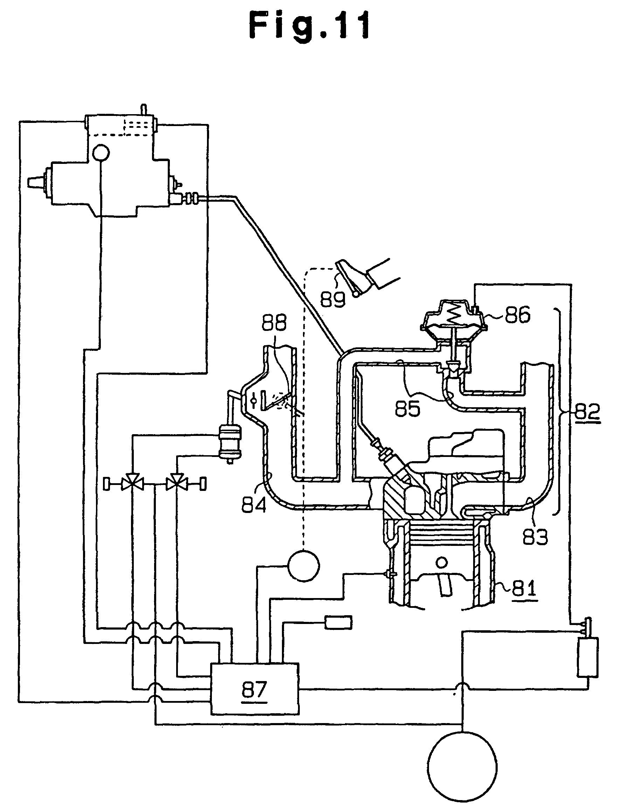

As shown in Fig. 11, a diesel engine 81 is provided with an exhaust gas recirculation (EGR) apparatus 82, an air-intake passage 84 and an exhaust passage 83. The exhaust gas recirculation (EGR) apparatus 82 has an EGR passage 85 for recirculating part of the exhaust gas to the air-intake passage 84 from the exhaust passage 83. An EGR valve 86 is located in the EGR passage 85 for controlling the amount of recirculated exhaust gas, or EGR amount. The EGR valve 86 is connected to an electronic control unit (ECU) 87. The ECU 87 selectively opens and closes the EGR valve 86 in accordance with the running condition of the engine 81, thereby controlling the EGR amount. As a result, the concentration of nitrogen oxide (NOx) in exhaust gas from the engine 81 is lowered.

When the amount of fuel injection is increased, for example, when the engine 81 is accelerated, the amount of intake air needs to be increased, accordingly. At this time EGR operation is stopped. Specifically, the ECU 87 commands the EGR valve 86 to close when the fuel supply to the engine 81 is increased. However, the command from the ECU 87 does not immediately stop the EGR. This is because the EGR valve 86 has a mechanical response delay. That is, the valve 86 closes when a certain period of time has elapsed after the ECU 87 commanded the valve 86 to close. Further, even if the valve 86 is closed, exhaust gas remains in the EGR passage 85 and the intake passage 84. The remaining gas is drawn into the engine 81 after the valve 86 is closed, thereby decreasing the ratio of intake air to the supplied fuel. In other words, the amount of intake air includes the recirculated residual exhaust gas, which is undesirable. Therefore, when EGR is stopped, the amount of intake air is not properly proportioned with the amount of supplied fuel. This increases the amount of black smoke from the engine 81.

In order to eliminate the drawback, the apparatus 82 controls the rate of fuel injection increase when engine 81 is accelerated. That is, the ECU 87 reduces the rate of fuel injection increase such that the amount of intake air is properly proportioned with the amount of the supplied fuel. This reduces the amount of black smoke from the engine 81.

When the speed of the engine 81 is decreased, the fuel injection amount is gradually reduced to avoid the shock caused by an abrupt fuel injection decrease. The process is generally called a "buffer process".

Although the above apparatus 82 reduces the amount of black smoke, the apparatus 82 causes the engine 81 to produce relatively low power. This is because the rate of fuel injection increase for the acceleration is reduced. This results in relatively low acceleration characteristics of the engine 81, thereby degrading the performance of the vehicle. Therefore, there is a demand for a technique that reduces black smoke exhausted from diesel engines having an EGR apparatus without lowering the power of the engines.

As described above, fuel injection amount is subjected to the "buffer process" when the engine 81 is decelerated, that is, the fuel injection amount is gradually reduced. This causes the following drawbacks.

An intake air control valve 88 is located in the air-intake passage 84 and is connected to a gas pedal 89. When the gas pedal 89 is released, the valve 88 closes the passage 84 and stops air flow to the engine 81. If the "buffer process" is performed, the fuel injection amount is gradually reduced. This increases the ratio of the fuel supplied to the engine 81 to the intake air amount. In other words, the intake air amount is not properly proportioned with the amount of supplied fuel. This generates excessive black smoke. The black smoke may be suppressed by increasing the speed of the fuel reduction. This, however, increases the shock caused by a fuel injection decrease and degrades the driving comfort of the vehicle.

Accordingly, it is an objective of the present invention to provide a control apparatus that reduces black smoke exhausted from a diesel engine without degrading the performance or comfort of the vehicle.

It is another objective of the present invention to provide a control apparatus that reduces black smoke exhausted from a diesel engine having an EGR system without degrading the acceleration characteristics of the engine, even if the EGR system has response delay.

It is yet another objective of the present invention to provide a control apparatus that reduces black smoke exhausted from a diesel engine and that gradually reduces the amount of supplied fuel when lowering the engine speed for reducing shock.

To achieve the above objectives, an apparatus for controlling an exhaust gas recirculation system in a diesel engine that communicates with an air exhaust passage and an air intake passage is disclosed. The engine combusts fuel with air supplied thereto through the air intake passage and discharges exhaust gas produced by the fuel combustion through the air exhaust passage. The recirculation system includes a recirculation passage. The recirculation passage connects the air exhaust passage with the air intake passage to control the exhaust gas flowing to the air intake passage by selectively opening and closing a first control valve disposed in the recirculation passage. This suppresses smoke produced by the exhaust gas. The apparatus includes a second control valve disposed in the air intake passage. The second control valve controls the air flowing to the engine. The apparatus also includes means for detecting a driving status of the engine, means for computing a target amount of the air to be supplied to the engine based on the detected driving status of the engine. The apparatus further includes means for controlling the second control valve to adjust the amount of the air based on the computed target amount, means for determining generation of the smoke based on the detected driving status of the engine, and means for correcting the amount of the air supplied to the engine. The correcting moans controls the second valve to increase the amount of the air with respect to the computed target amount for a predetermined time period after the determining means has determined the generation of the smoke.

Other aspects and advantages of the invention will become apparent from the following description, taken in conjunction with the accompanying drawings, illustrating by way of example the principals of the invention.

The invention, together with objects and advantages thereof, may best be understood by reference to the following description of the presently preferred embodiments together with the accompanying drawings.
Fig. 1 is a diagrammatic cross-sectional view illustrating an engine system according to a preferred embodiment of the present invention;
Fig. 2 is a block diagram showing the structure of an electronic control unit;
Fig. 3 is a flowchart illustrating a routine for controlling fuel injection amount and intake air amount;
Fig. 4 is a flowchart illustrating a routine which follows the routine of Fig. 3;
Fig. 5 is a flowchart illustrating a routine which follows the routine of Fig. 3;
Fig. 6 is a flowchart illustrating an "EGR control routine";
Fig. 7 is a graph showing the relationship between determination injection amount and the speed of an engine;
Fig. 8 is a timing chart illustrating changes of the position of a gas pedal, the opening of an EGR valve and a final opening of a throttle valve;
Fig. 9 is a graph showing the relationship between a basic injection amount and the engine speed;
Fig. 10 is a timing chart illustrating changes of the position of a gas pedal, a final injection amount and a final opening of a throttle valve;
Fig. 11 is a diagrammatic cross-sectional view illustrating a prior art engine system;

A preferred embodiment of a control apparatus in an electronically controlled diesel engine of a vehicle will now be described with reference to the drawings.

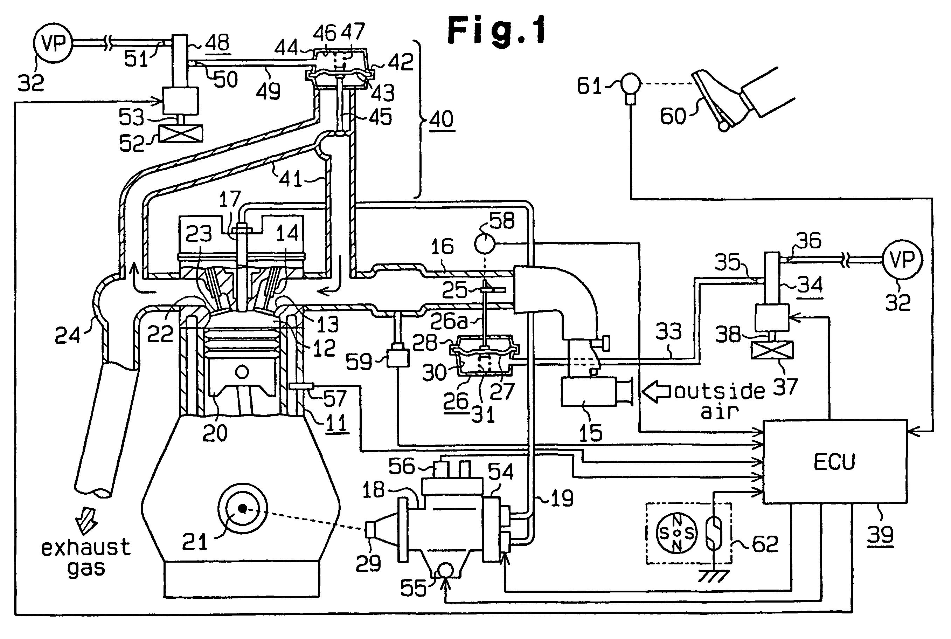

As shown in Fig. 1, a diesel engine 11 includes a plurality of cylinders (only one is shown) and a crankshaft 21. A piston 20 is accommodated in each cylinder and coupled to the crankshaft 21 by a rod. The inner wall of each cylinder and the associated piston 20 define a combustion chamber 12. A fuel injection nozzle 17 is provided in the end of each cylinder. The nozzles 17 are connected to a fuel injection pump 18 by a fuel line 19. The combustion chambers 12 are connected to an air-intake passage 16. Specifically, the passage 16 has a plurality of suction ports 13, each of which is connected to one of the combustion chambers 12. Each auction port 13 is opened and closed by an intake valve 14. An air cleaner 15 is attached to the distal end of the passage 16. The combustion chambers 12 are also connected to an exhaust passage 24. Specifically, the passage 24 has a plurality exhaust ports 22, each of which is connected to one of the combustion chambers 12. Each exhaust port 22 is opened and closed by an exhaust valve 23.

In the auction stroke of the engine 1, the suction ports 13 are opened by the intake valves 14. This draws outside air into the air-intake passage 16 via the air cleaner 15. The drawn air then flows into the individual combustion chambers 12. Each fuel injection nozzle 17 injects fuel that is supplied under pressure by the pump 18 into the associated combustion chamber 2.

In the compression stroke, an upward movement of the piston 20 compresses air-fuel mixture in the associated combustion chamber 12, thereby causing the mixture to combust. The combustion pushes the piston 20 downward to turn the crankshaft 21. The engine 11 thus generates driving power. In the exhaust stroke, the exhaust ports 22 are opened by the exhaust valves 23. The exhaust gas generated in each combustion chamber 12 is discharged to the exhaust passage 24. The gas is then exhausted outside.

An intake restriction valve 25 is provided in the air-intake passage 16. The valve 25 is controlled by an actuator 26 for controlling the amount of air flow in the passage 16 in accordance with the running condition of the engine 11. The actuator 26 includes a housing 28 and a diaphragm 27, which is located in the housing 28. The lower portion of the housing 28 and the diaphragm 27 define a pressure chamber 30. A rod 26a is secured to the top side of the diaphragm 27 and extends through the housing 28. The distal end of the rod 26a is connected to the restriction valve 25. A spring 31 extends between the diaphragm 27 and the bottom of the housing 28. The spring 31 is vertically aligned with the rod 26a and urges the rod 26a upward.

The pressure chamber 30 is connected to a vacuum pump 32 via a vacuum passage 33. A first electric vacuum regulating valve (EVRV) 34 is located in the passage 33. The EVRV 34 is an electromagnetic cross valve having three ports 35, 36 and 38. The output port 35 communicates with the pressure chamber 30 of the actuator 26 by the passage 33. The negative pressure port 36 communicates with the vacuum pump 32. The atmospheric air port 38 communicates with the atmospheric air via a filter 37. The filter 37 prevents dust and mud from entering the first EVRV 34 through the atmospheric air port 38. When the first EVRV 34 is electrically enabled, the output port 35 is communicated with the negative pressure port 36. This introduces negative pressure produced by the pump 32 into the pressure chamber 30 of the actuator 26. When the first EVRV 34 is electrically disabled, the output port 35 is communicated with the atmospheric air port 38. This introduces the atmospheric pressure into the pressure chamber 30.

The first EVRV 34 is duty controlled by an electronic control unit (ECU) 39, which will be described later. The pressure in the pressure chamber 30 is controlled, accordingly.

If the ECU 39 enables the first EVRV 34 with a 100% duty ratio, the output port 35 is communicated with the negative pressure port 36. This allows negative pressure produced by the pump 32 to be introduced into the pressure chamber 30. This moves the diaphragm 27 downward and retracts the rod 26a against the force of the spring 31. The rod 26a moves the restriction valve 25 such that the effective cross-sectional area of the intake passage 16 decreases. Consequently, the valve 25 reduces air flow in the passage 16.

Contrarily, if the ECU 39 disables the first EVRV 34 with a 0% duty ratio, the output port 35 is communicated with the atmospheric air port 38. This allows the force of the spring 31 to move the diaphragm 27 and the rod 26a upward as shown in Fig. 1. The rod 26a moves the restriction valve 25 such that the effective cross-sectional area of the intake passage 16 increases. The air flow through the passage 16, or intake air amount, is increased, accordingly. The ECU 39 controls the EVRV 34 by varying the duty ratio from 0% to 100%, thereby varying the magnitude of negative pressure that is introduced into the pressure chamber 30. The opening of the restriction valve 25 is controlled, accordingly. The intake air amount is therefore continuously varied in accordance with the running condition of the engine 11.

An exhaust gas recirculation (EGR) apparatus 40 is connected to the engine 11. The EGR apparatus 40 includes an EGR passage 41 and an EGR valve 42. One end of the passage 41 is connected to the exhaust passage 24 and the other end is connected to the air-intake passage 16. The EGR valve 42 is located in the passage 41. The apparatus 40 recirculates part of the exhaust gas in the exhaust passage 24 to the air-intake passage 16 through the passage 41. The recirculated gas is returned to the individual combustion chambers 12. The EGR valve 18 controls the EGR amount in the passage 41.

The EGR valve 42 is a diaphragm valve that opens and closes in response to the application of negative pressure and atmospheric pressure as working pressures. The EGR valve 42 has a housing 44 accommodating a diaphragm 43, a rod-like valve body 45 secured to the diaphragm 43. The upper portion of the housing 44 and the diaphragm 43 define a pressure chamber 46. A spring 47 extends between the inner wall of the housing 44 and the diaphragm 43 in the pressure chamber 46. The spring 47 urges the valve body 45 in a direction closing the EGR passage 41.

The EGR apparatus 40 further includes a second EVRV 48. The second EVRV 48 is an electromagnetic cross valve and is connected to the ECU 39. When enabled, the EVRV 48 introduces atmospheric air pressure to the pressure chamber 46. When disabled, the EVRV 48 introduces negative pressure produced by the pump 32 to a pressure chamber 46. The EVRV 48 has three ports 50, 51 and 52. The output port 50 communicates with the pressure chamber 46 of the EGR valve 42. The negative pressure port 51 communicates with the pump 32. The atmospheric air port 53 communicates with the atmospheric air via a filter 52. The filter 52 prevents dust and mud from entering the second EVRV 48 through the atmospheric air port 53.

The second EVRV 48 is duty controlled by the ECU 39. The pressure in the pressure chamber 46 is controlled, accordingly.

If the ECU 39 enables the second EVRV 48 with a 100% duty ratio, the output port 50 is communicated with the negative pressure port 51. Negative pressure produced by the pump 32 is introduced into the pressure chamber 46. This moves the diaphragm 27 upward and retracts the valve body 45 against the force of the spring 47. Accordingly, the valve body 45 fully opens the EGR valve 42. This recirculates part of the exhaust gas in the exhaust passage 24 to each combustion chambers 12 via the EGR passage 41 and the air-intake passage 16. In other words, EGR is executed.

Contrarily, if the ECU 39 disables the second EVRV 48 with a zero% duty ratio, the output port 50 is communicated with the atmospheric air port 53. Atmospheric air pressure is introduced to the pressure chamber 46. This allows the force of the spring 47 to move the diaphragm 43 and the valve body 45 downward as shown in Fig. 1. Accordingly, the valve body 45 fully closes the EGR valve 42. This stops the flow of exhaust gas in the EGR passage 41. In other words, EGR is stopped. The ECU 39 controls the EVRV 48 by varying the duty ratio from 0% to 100%, thereby varying the magnitude of negative pressure that is introduced to the pressure chamber 46. The opening of the EGR valve 42 is controlled, accordingly. The amount of EGR is therefore continuously varied in accordance with the running condition of the engine 11.

The fuel injection pump 18 is a known distribution type and supplies fuel to each injection nozzle 17 through the fuel line 19. The fuel is then combusted in each combustion chamber 12. The injection pump 18 compresses fuel from a fuel tank (not shown.) to a highly pressurized state and supplies a predetermined amount of the pressurized fuel to the individual injection nozzles 17 at a predetermined timing. Each injection nozzle 17 operates based on the pressure of the supplied fuel and injects the fuel to the associated combustion chamber 12. The injection pump 18 has an electromagnetic spill valve 54 and a timer 55. The spill valve 54 adjusts the amount of fuel to be pumped out from the pump 18. The timer 55 controls the start timing for the fuel discharge from the pump 18, that is, the timer 55 adjusts the times at which fuel is injected from each injection nozzle 17. The spill valve 54 and the timer 55 are electrically controlled by the ECU 39.

A drive shaft 29 of the injection pump 18 is connected to the crankshaft 21 of the engine 11. The injection pump 18 is driven in response to the operation of the engine 11. A rotational speed sensor 56 is provided at the injection pump 18. The sensor 56 detects the rotational speed of the crankshaft 21, or the engine speed NE, based on the rotational speed of the drive shaft 29, and issues a signal corresponding to the engine speed NE.

A coolant temperature sensor 57 is provided at the engine 11 for detecting the temperature THW of the engine coolant and issues a signal corresponding to the coolant temperature. A restriction valve sensor 58 is provided in the vicinity of the restriction valve 25. The sensor 58 detects the opening amount of the valve 25 and issues a signal corresponding to the valve opening.

An intake pressure sensor 59 is provided in the air-intake passage 16. The sensor 59 detects intake pressure PM in the air-intake passage 16 and issues a signal corresponding to the intake pressure PM. A gas pedal sensor 61 is provided in the vicinity of the gas pedal 60. The sensor 61 detects the amount of depression ACCP of the gas pedal 60 and issues a signal corresponding to the amount of pedal depression ACCP.

A vehicle speed sensor 62 is provided in a transmission (not shown). The sensor 62 detects vehicle speed SP based on rotational speed of gears in the transmission.

The ECU 39 receives signals transmitted from the sensors 56 to 59, 61 and 62. The ECU 39 controls the electromagnetic spill valve 54 and the timer 55 in the injection pump 18, the first EVRV 34 and the second EVRV 48 based on the received signals.

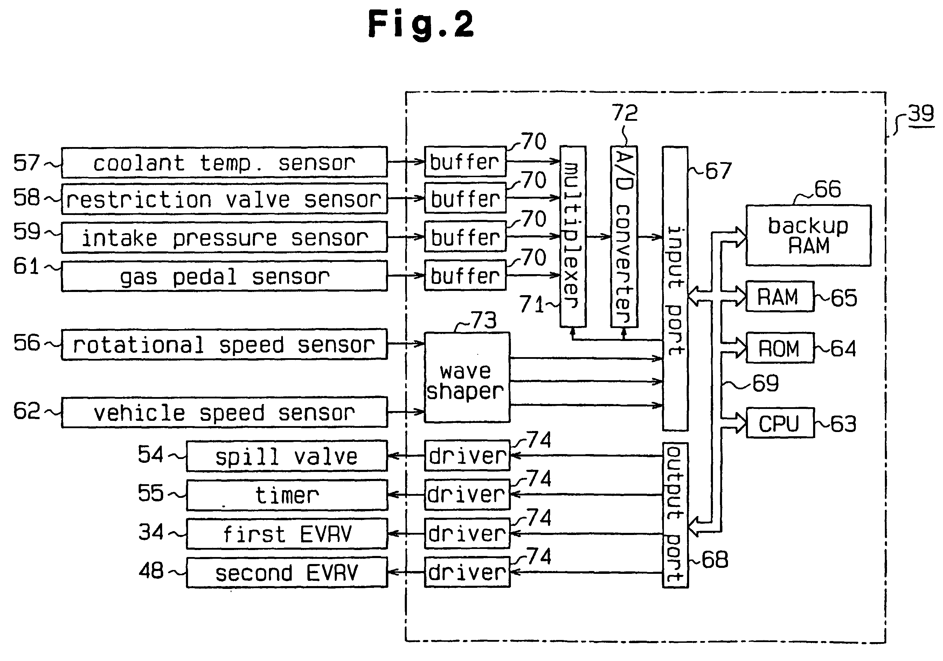

As shown in the block diagram of Fig. 2, the ECU 39 includes a central processing unit (CPU) 63, a read only memory (ROM) 64, a random access memory (RAM) 65, and a backup RAM 66. The ROM 64 previously stores predetermined control programs. The RAM 65 temporarily stores the results of computations performed by the CPU 63. The backup RAM 66 retains prestored data. The ECU 39 also includes an input port 67 and an output port 68. The CPU 63, the ROM 64, the RAM 65, the backup RAM 66, the input port 67 and the output port 68 are connected one another by a bus 69.

The coolant temperature sensor 57, the valve sensor 58, the gas pedal sensor 61 and the intake pressure sensor 59 are connected to the input port 67 by buffers 70, a multiplexer 71 and an analogue-digital converter 72. The rotational speed sensor 56 and the vehicle speed sensor 62 are connected to the input port 67 by a wave shaper 73. The CPU 63 receives signals from the sensors 56 to 59, 61 and 62 via the input port 67.

The electromagnetic spill valve 54, the timer 55 and the EVRVs 34, 48 are connected to the output port 68 by drivers 74. The CPU 63 performs fuel injection control, intake air control and EGR control based on the signals from the sensors 56 to 59, 61 and 62.

The fuel injection control in this embodiment refers to control of the amount of fuel discharged from the injection pump 18 and the timing of the discharging in accordance with the running conditions of the engine 11. The intake air control refers to actuation of the restriction valve 25 by controlling the first EVRV 34 in accordance with the running condition of the engine 11. The amount of intake air is thus controlled. The EGR control refers to actuation of the EGR valve 42 by controlling the second EVRV 48 in accordance with the running conditions of the engine 11. The EGR amount is thus controlled.

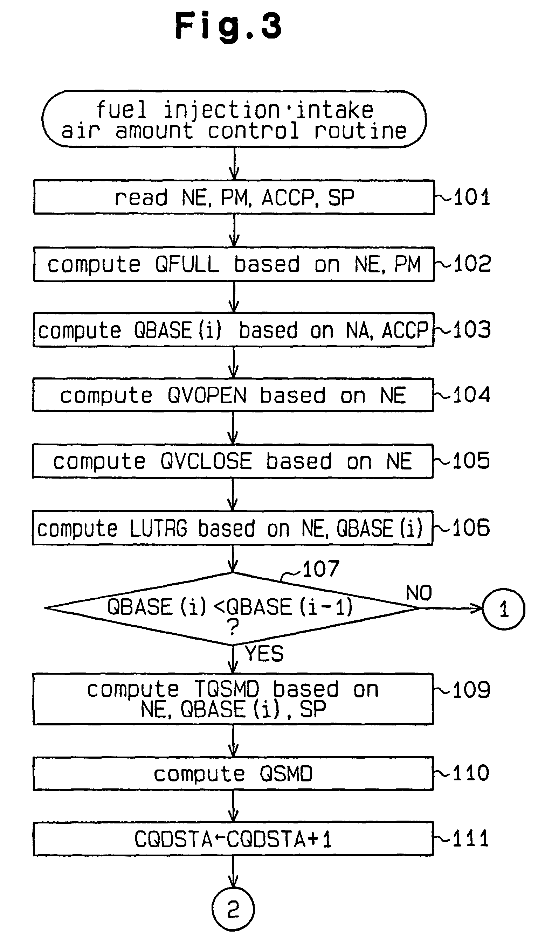

A routine for the fuel injection control and the intake air control will now be described with reference to the flowcharts of Figs 3 to 5. The CPU 63 periodically performs the routine at predetermined intervals.

In step 101, the CPU 63 reads the engine speed NE, the intake pressure PM, the amount of pedal depression ACCP and the vehicle speed SP detected by the sensors 56, 59, 61 and 62.

In step 102, the CPU 63 computes a maximum fuel injection amount QFULL in accordance with the engine speed NE and the intake air pressure PM based on function data previously stored in the ROM 64. The maximum fuel injection amount QFULL refers to the upper limit of the fuel amount supplied to the combustion chambers 12. If the supplied fuel amount exceeds this upper limit, black smoke from the combustion chambers 12 drastically increases.

In step 103, the CPU 63 computes a basic fuel injection amount QBASE(i) in accordance with the engine speed NE and the gas pedal pressed amount ACCP based on function data previously stored in the ROM 64.

In step 104, the CPU 63 computes a first determination injection amount QVOPEN in accordance with the engine speed NE based on function data previously stored in the ROM 64. The first determination injection amount QVOPEN is a reference value for determining whether to temporarily increase the opening of the restriction valve 25 beyond a basic restriction valve opening LUTRG, which will be discussed later.

In step 105, the CPU 63 computes a second determination injection amount QVCLOSE in accordance with the engine speed NE based on function data previously stored in the ROM 64. The second determination injection amount QVCLOSE is a reference value for determining whether to reset the opening of the restriction valve 25, which has been temporarily increased, to the basic restriction valve opening LUTRG.

One value of QVOPEN and one value of QVCLOSE correspond to a given engine speed NE.

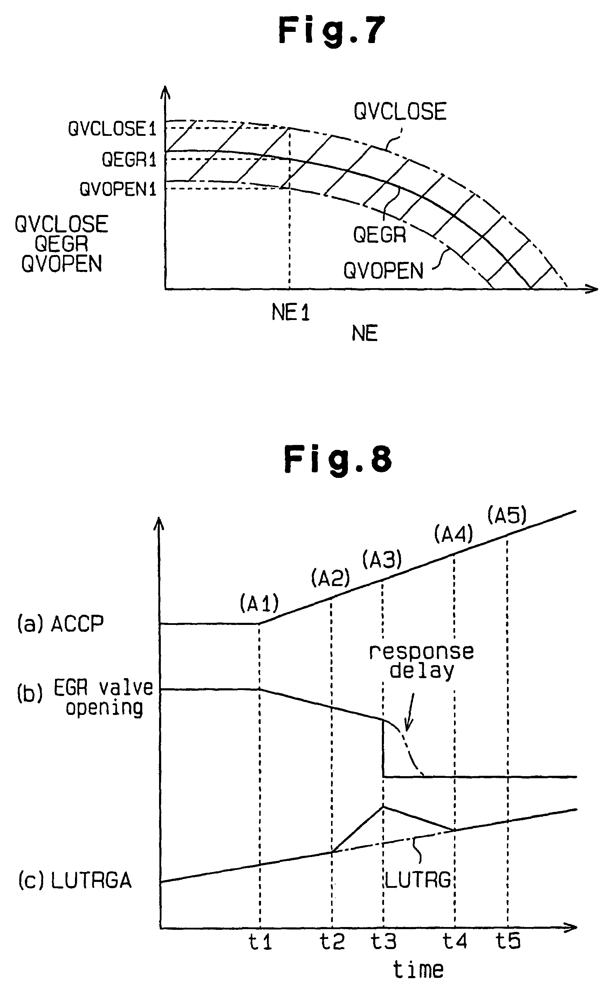

In the graph of Fig. 7, the alternate long and short dash line represents the first determination injection amount QVOPEN and the two-dot chain line represents the second determination injection amount QVCLOSE. The determination injection amounts QVOPEN and QVCLOSE decrease as the engine speed NE increases. If the engine speed NE is NE1 in step 100, the CPU 63 selects QVOPEN1 and QVCLOSE1 as the first and second determination injection amounts.

In step 106, the CPU 63 computes the basic restriction valve opening LUTRG in accordance with the engine speed NE and the basic fuel injection amount QBASE(i) based on function data previously stored in the ROM 64. The basic restriction valve opening LUTRG is determined such that a required amount of fuel is drawn into the combustion chambers 12 in accordance with the running condition of the engine 11.

In step 107, the CPU 63 judges if the basic injection amount QBASE(i) computed in the current routine is smaller than the basic injection amount QBASE(i - 1) computed in the previous routine. In other words, the CPU 63 judges whether the basic injection amount QBASE (i), which corresponds to the amount of pedal depression ACCP, has decreased, thereby judging whether the engine 11 is decelerating, or whether the driver is attempting to decelerate the vehicle.

If the value of QBASE(i) is less than the value of QBASE(i - 1), the CPU 63 judges that the engine 11 is decelerating, or that the driver is attempting to decelerate the vehicle. Then, the CPU 63 executes a buffer process for gradually reducing the injection amount in steps 109 to 115.

In step 109, the CPU 63 computes a buffer time TQSMD in accordance with the engine speed NE, the basic fuel injection amount QBASE(i) and the vehicle speed SP based on function data previously stored in the ROM 64.

In step 110, the CPU 63 computes a buffer injection amount QSMD. Specifically, the CPU 63 computes a buffer amount in accordance with the engine speed NE and the amount of accelerator depression ACCP based on function data previously stored in the ROM 64. The CPU 63 then computes the buffer injection amount QSMD by subtracting the buffer amount from the basic injection amount QBASE (i - 1) computed in the previous routine.

In step 111, the CPU 63 increments a counter CQDSTA by 1. The counter CQDSTA shows the elapsed time since the CPU 63 started the buffer process.

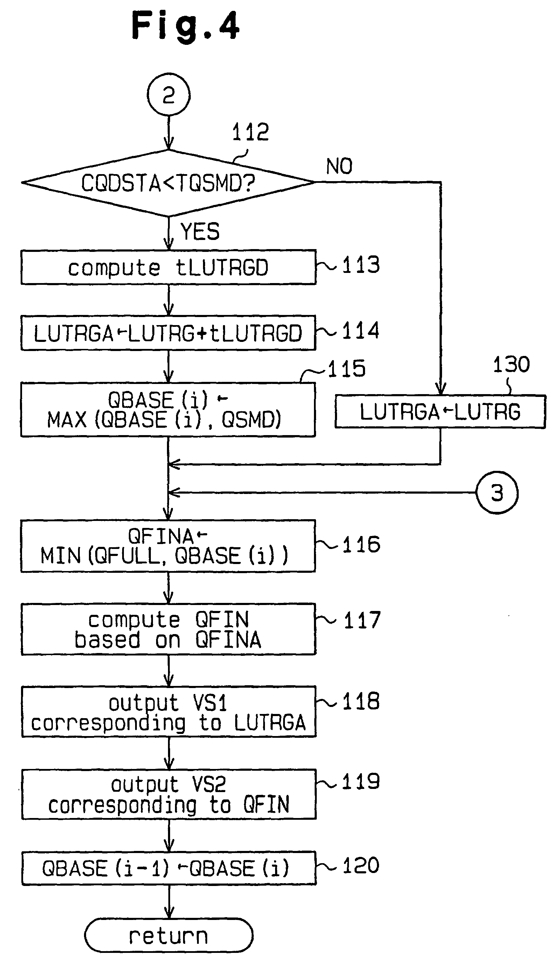

In step 112 shown in the flowchart of Fig. 4, the CPU 63 judges if the counter CQDSTA is less than the buffer time TQSMD computed in step 109. If CQDSTA is less than TQSMD, the CPU 63 moves to step 113. In step 113, the CPU 63 computes a valve opening compensation value tLUTRGD, which is used for adjusting the basic restriction valve opening LUTRG when the engine speed NE is decreasing. Specifically, the CPU 63 computes the valve opening compensation value tLUTRGD in accordance with the engine speed NE, the basic injection amount QBASE(i), the gas pedal pressed amount ACCP and the intake air pressure PM based on function data previously stored in the ROM 64. In this embodiment, the CPU 63 substantially equalizes the rate of decrease of the buffer fuel injection amount QSMD and the rate of decrease of the valve opening compensation value tLUTRGD.

In step 114, the CPU 63 computes a final restriction valve opening LUTRGA by adding the compensation value tLUTRGD to the basic valve opening LUTRG.

In step 115, the CPU 63 compares the basic injection amount QBASE(i) and the buffer injection amount QSMD and selects the greater one as a new basic injection amount QBASE(i).

If CQDSTA is equal to or greater than TQSMD in step 112, the CPU 63 moves to step 130. In step 130, the CPU 63 adopts the basic valve opening LUTRG as a final valve opening LUTRGA.

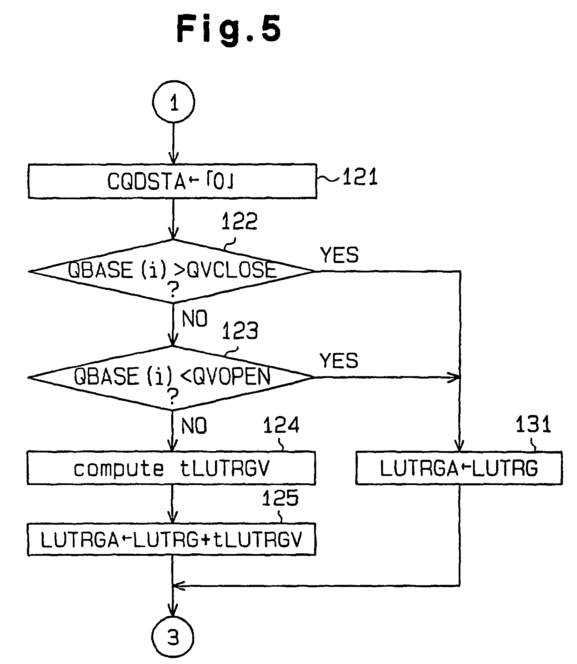

If QBASE(i) is equal to or greater than QBASE(i - 1) in step 107, the CPU 63 judges that the engine 11 is not decelerating and moves to step 121 shown in the flowchart of Fig. 5. In step 121, the CPU 63 resets the counter CQDSTA to "0".

In step 122, the CPU 63 compares the basic injection amount QBASE(i) with the second determination injection amount QVCLOSE computed in step 105. If QBASE(i) is equal to or smaller than QVCLOSE, the CPU 63 moves to step 123. In step 123, the CPU 63 compares the basic injection amount QBASE(i) with the first determination injection amount QVOPEN computed in step 104.

If QBASE(i) is equal to or greater than QVOPEN, the CPU 63 moves to step 124. In step 124, the CPU 63 computes an opening compensation value tLUTRGV. The value tLUTRGV is used for adjusting the basic restriction valve opening LUTRG when EGR is stopped. Specifically, the CPU 63 computes the value tLUTRGV in accordance with the engine speed NE and the basic injection amount QBASE (i) based on function data previously stored in the ROM 64.

In step 125, the CPU 63 computes a final restriction valve opening LUTRGA by adding the valve opening compensation value tLUTRGV to the basic restriction valve opening LUTRG. If QBASE(i) is greater than QVCLOSE in step 122 or if QBASE(i) is smaller than QVOPEN in step 123, that is, if QBASE(i) is outside the diagonally shaded region in the graph of Fig. 7, the CPU 63 moves to step 131. In step 131, the CPU 63 adopts the basic valve opening LUTRG as a final valve opening LUTRGA.

In step 116, the CPU 63 compares the maximum injection amount QFUll and the basic injection amount QBASE(i) and selects the smaller one as an injection amount QFINA in the current routine.

In step 117, the CPU 63 adds compensation values to the injection amount QFINA by performing a predetermined computation to obtain a final injection amount QFIN.

In step 118, the CPU 63 transmits a command signal VS1 to the first EVRV 34. The signal VS1 has a duty ratio corresponding to the final restriction valve opening LUTRGA. The CPU 63 controls the first EVRV 34 by the command signal VS1, thereby actuating the restriction valve 25.
Accordingly, the amount of intake air drawn into the combustion chambers 12 is controlled.

In step 119, the CPU 63 transmits a command signal VS2 to the electromagnetic spill valve 54. The signal VS2 corresponds to the final injection amount QFIN. The CPU 63 controls the spill valve 54 by the command signal VS2, thereby causing the injection pump 18 to send a predetermined amount of fuel to the injection nozzles 17.

In step 120, the CPU 63 stores the basic injection amount QBASE(i) computed in the current routine in the RAM 65 and temporarily suspends the current routine. The stored basic injection amount QBASE(i) will be used as a basic injection amount QBASE(i - 1) in the next routine.

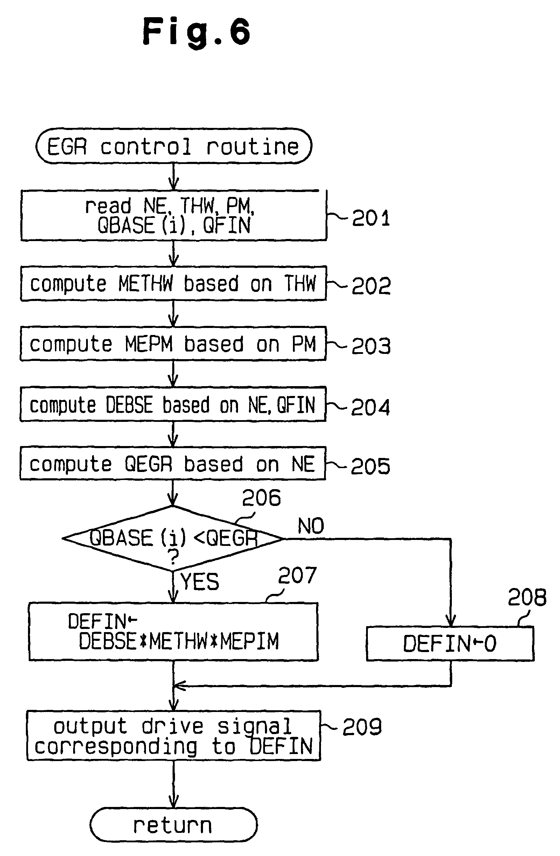

An EGR control routine will now be described with reference to the flowchart of Fig. 6. In step 201, the CPU 63 reads the engine speed NE, the coolant temperature THW and the intake pressure PM. The CPU 63 also reads the basic injection amount QBASE(i) and the final injection amount QFIN computed in the above described routine.

In step 202, the CPU 63 computes a coolant temperature compensation coefficient METHW in accordance with the coolant temperature THW based on function data previously stored in the ROM 64.

In step 203, the CPU 63 computes an intake pressure compensation coefficient MEIPM in accordance with the intake pressure PM based on function data previously stored in the ROM 64.

In step 204, the CPU 63 computes a basic duty ratio DEBSE in accordance with the engine speed NE and the final injection amount QFIN based on function data previously stored in the ROM 64. In this embodiment, the greater the final injection amount QFIN is, the smaller the basic duty ratio DEBSE is set. Therefore, in normal conditions, the basic EGR duty ratio DEBSE becomes smaller as the basic injection amount QBASE increases.

In step 205, the CPU 63 computes a determination injection amount QEGR in accordance with the engine speed NE based on function data previously stored in the ROM 64. The determination injection amount QEGR is a reference value for determining whether the running condition of the engine 11 requires an EGR by opening the EGR valve 42. The determination injection amount QEGR is determined in accordance with the engine speed NE.

The solid curve line in Fig. 7 represents the relationship between the determination injection amount QEGR and the engine speed NE. The determination injection amount QEGR decreases as the engine speed NE increases. Further, the determination injection amount QEGR is always greater than the first determination injection amount QVOPEN and smaller than the second determination injection amount QVCLOSE at any given engine speed NE.

The CPU 63 refers to the function data of Fig. 7 to determine the determination injection value QEGR in accordance with the engine speed NE. For example, if the engine speed NE is a value NE1 in step 201, the CPU 63 selects a value QEGR1 as the determination injection amount in step 205.

In step 206, the CPU 63 judges whether the basic injection amount QBASE(i) is smaller than the determination injection amount QEGR. If QBASE(i) is smaller than QEGR in step 206, the CPU 63 moves to step 207. In step 207, the CPU 63 computes a final duty ratio DEFIN by multiplying the basic duty ratio DEBSE by the coolant temperature compensation coefficient METHW and the intake pressure compensation coefficient MEPM. The CPU 63 then moves to step 209.

On the other hand, if QBASE is equal to or greater than QEGR in step 206, the CPU 63 moves to step 208. In step 208, the CPU 63 sets the final duty ratio at zero. The CPU 63 then moves to step 209.

In step 209, the CPU 63 transmits a drive signal to the second EVRV 48. The drive signal has a frequency corresponding to the final duty ratio DEFIN. The opening of the EGR valve 42 is controlled in accordance with the final duty ratio DEFIN. The CPU 63 then temporarily suspends the current routine.

The operation will now be described.

The part (a) of Fig. 8 shows the gas pedal pressed amount ACCP. First, ACCP stays at a certain level and is then increased to accelerate the engine 11. The parts (b) and (c) show opening of the EGR valve 42 and the final restriction valve opening LUTRGA when ACCP is increased.

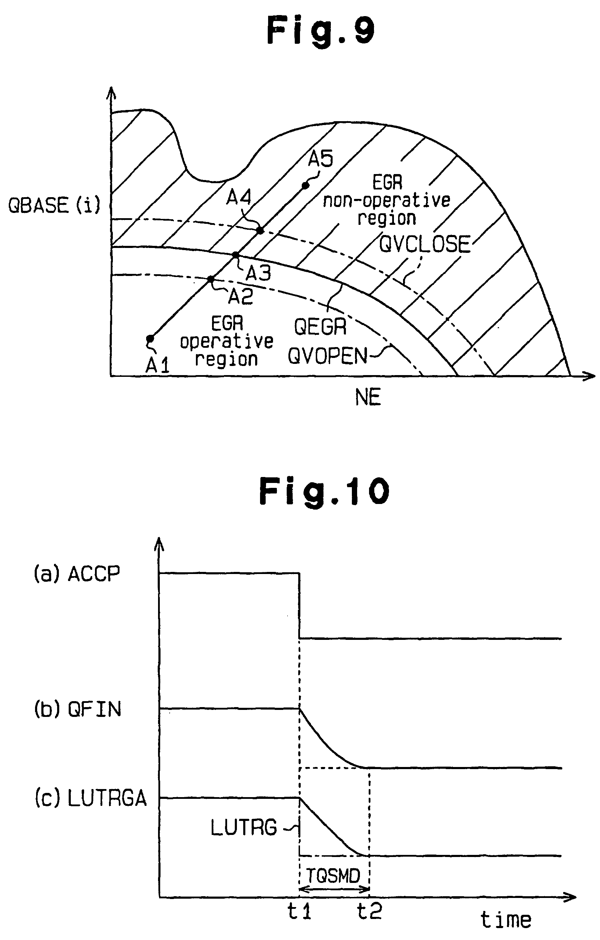

A line including points A1 to A5 in Fig. 9 represents the relationship between the engine speed NE and the basic injection amount QBASE(i). The engine speed NE and the basic injection amount QBASE(i) changes from the point A1 to the point A5 via the points A2, A3 and A4. The states represented by the points A1 to A5 correspond to times t1 to t5 in Fig. 8. The continuous curve in Fig. 9 represents the determination injection amount QEGR. The alternate long and short dash line represents the first determination injection amount QVOPEN and the two-dot chain line represents the second determination injection amount QVCLOSE.

Before the time t1 in Fig.8, the engine speed NE and the basic injection amount QBASE(i) are in a state represented by the point A1 in Fig. 9. In this state, QBASE(i) is smaller than the determination injection amount QEGR, that is, the point A1 is in an EGR operative region. Therefore, the EGR valve 42 is open for performing an EGR operation.

Then, Fig. 8 shows that the accelerator pedal depression ACCP is increased in a period from the time t1 to the time t3. The engine speed NE and the basic injection amount QBASE(i) are increased, accordingly. That is, the point corresponding to NE and QBASE(i) moves from A1 to A3. Since the basic injection amount QBASE(i) increases from the time t1 to the time t3, the opening of the EGR 42 gradually decreases. Accordingly, the amount of exhaust gas recirculated through the EGR passage 41 is decreased.

At the time t3 the point corresponding to the engine speed NE and the basic injection amount QBASE(i) is A3. In this state, the basic injection amount QBASE(i) is equal to the determination injection amount QEGR. In other words, the point enters the diagonally shaded non-EGR region. Accordingly, the final EGR duty ratio DEFIN is set at zero in step 208 in the flowchart of Fig. 6. The CPU 63 controls the second EVRV 48 for closing the EGR valve 42. The EGR operation is thus stopped.

The EGR operation is stopped when a certain time has elapsed after the CPU 63 controls the second EVRV 48 based on the final duty ration DEFIN. In other words, the EGR valve 42 is actuated with a response delay illustrated by a two-dot chain line in the part (b) of Fig. 8. Accordingly, the EGR operation is stopped at a time that is a little later than the time t3. Further, exhaust gas that is drawn into the intake passage 16 before the EGR valve 42 is closed remains for a certain period of time. The response delay of the EGR valve 42 and the residual exhaust gas in the intake passage 16 reduces the ratio of intake air to the fuel injection amount, thereby producing excessive black smoke.

However, the above described apparatus and method suppress the amount of black smoke by the following procedure. At the time t2, the point corresponding to the engine speed NE and the basic injection amount QBASE(i) is A2. The basic injection amount QBASE(i) is equal to the first determination injection amount QVOPEN. The CPU 63 computes a final restriction valve opening LUTRGA by adding the opening compensation value tLUTRGV to the basic restriction valve opening LUTRG in step 125 in the routine of Figs. 3 to 5. As a result, the opening of the intake restriction valve 25, or the final restriction opening LUTRGA, is greater than the basic restriction valve opening LUTRG, which is illustrated by an alternate long and short dash line in part (c) of Fig. 8.

As the amount of pedal depression ACCP is increased between the time t2 to the time t4, the point corresponding to the engine speed NE and the basic injection amount QBASE(i) moves from A2 to A4. As a result, the basic injection amount QBASE(i) is equal to the second determination injection amount QVCLOSE. In step 131, the CPU 63 adopts the basic restriction valve opening LUTRG as a final restriction valve opening LUTRGA. As a result, the opening of the intake restriction valve 25, or the final restriction valve opening LUTRGA, is equal to the basic restriction valve opening LUTRG as shown in part (c) of Fig. 8.

As described above, the CPU 63 transmits a command to close the EGR valve 42 at the time t3. The opening of the intake restriction valve 25, or the final restriction opening LUTRGA, is greater than the basic restriction valve opening LUTRG before and after the time t3, or between the time t2 and t4. Accordingly, despite the response delay of the EGR valve 42 and the residual exhaust gas in the intake passage 16, the amount of intake air is increased. This suppresses changes in air-fuel ratio, thereby preventing an intake air amount shortage with respect to the fuel injection amount. Excessive black smoke is thus suppressed.

In the prior art apparatus, black smoke is suppressed by controlling the fuel injection amount. Contrarily, the above embodiment controls the amount of intake air. Therefore, suppression of black smoke does not decrease the torque of the engine 11. The acceleration characteristics of the vehicle are thus improved. The performance of the vehicle is thus improved.

The opening of the intake air restriction valve 25 is greater than the basic restriction opening amount LUTRG by a predetermined amount, or by the opening compensation value tLUTRGV, before and after the EGR valve 42 is closed. This increases the pressure in the intake passage 16, thereby decreasing the difference between the pressure in the exhaust passage 24 and the intake passage 16. The amount of recirculated exhaust gas is varied not only by the opening of the EGR valve 42 but also by the pressure deference between the passages 16, 24. Therefore, decreasing the pressure difference decreases the EGR amount.

As a result, despite the response delay of the EGR valve 42, the EGR amount is positively reduced. Black smoke is thus positively suppressed.

The above method and apparatus suppress black smoke generated by the response delay of the EGR valve 42 and the residual exhaust gas in the intake passage 16. Therefore, EGR rate is determined without taking the generation of black smoke into account. This results in efficient EGR control.

The final restriction valve opening LUTRGA becomes greater than the basic restriction valve opening LUTRG at a time (t2 in Fig. 8) that is earlier than a time (t3 in Fig. 8) at which the CPU 63 transmits a closing command to EGR valve 42. Therefore, even if the actuator 26 and the restriction valve 25 have a response delay like the EGR valve 42, the opening of the restriction valve 25 is increased for increasing intake air amount when the EGR valve 42 is closing.

Fig. 10 is a timing chart illustrating changes of the amount of pedal depression ACCP, the final injection amount QFIN and the final restriction valve opening LUTRGA. Initially, ACCP is maintained at a certain level and is later decreased for decelerating the vehicle. In this case the above described buffer process is performed. Specifically, the final injection amount QFIN is gradually reduced between times t1 and t2. As illustrated in part (c) of Fig. 10, the final restriction valve opening LUTRGA decreases substantially by the same rate as the decrease of the final injection amount QFIN. That is, while the buffer process is executed, the final restriction valve opening LUTRGA is greater than the basic restriction valve opening LUTRG. This increases the ratio of intake air to the fuel injection amount. Therefore, when the injection fuel amount is gradually decreased for decelerating the engine, excessive black smoke caused by a shortage of intake air is prevented.

When performing the buffer process, the decrease rate of the buffer injection amount QSMD is substantially equal to the rate of decrease of the final restriction valve opening LUTRGA. This reduces changes of air-fuel ratio during the buffer process. Accordingly, the amount of particulate in exhaust gas is drastically reduced, and the emissions are improved. The fuel economy of the engine is also improved.

The engine 11 is provided with the EGR apparatus 40. When decelerating the engine 11, the basic injection amount QBASE(i) becomes smaller than the determination injection amount QEGR. That is, the point corresponding to QBASE(i) and the engine speed NE enters the EGR operative region in the graph of Fig. 9. This may decrease the ratio of intake air to fuel injection amount, thereby generating excessive black smoke.

However, according to this embodiment, the rate of intake air to fuel injection amount is increased when the engine 11 is decelerating. Therefore, when the buffer process is performed, the amount of black smoke is reduced. Further, the device and method of above embodiment suppress the amount of black smoke when the vehicle is at a high-altitude location, where the amount of intake air may be insufficient.

The above method and apparatus suppress the production of excessive black smoke during a buffer operation. Therefore, the buffer injection amount QSMD is determined without considering production of black smoke. In other words, the buffer injection amount QSMD can be determined such that undesirable reaction of the vehicle caused by fluctuations of engine power is reduced. The performance of the vehicle is thus improved.

The present invention may be further embodied as follows. The following embodiments have the same operation and advantages as the above embodiment.
(1) In the above description, the intake air restriction valve 25 is operated by the actuator 26 and the first EVRV 34. However, the valve 25 may be operated by, for example, a stepping motor.
(2) In the above description, the opening compensation value tLUTRGD, when the engine 11 is decelerating, is computed based on the engine speed NE, the basic injection amount QBASE(i), the amount of pedal depression ACCP and the intake air pressure PM. The opening compensation value tLUTRGV, when EGR is stopped, is computed based on the engine speed NE and the basic injection amount QBASE(i). However, the values of tLUTRGD and tLUTRGV may be constant. In this case, both values must be greater than zero.
(3) In the above description, the opening rate of the restriction valve 25 increases at a time (t2 in Fig. 8) that is earlier than a time (t3 in Fig. 8) at which the CPU 63 commands the EGR valve 42 to close. This is because the valve 25 may have a response delay. However, if the response delay of the valve 25 is small, the opening rate of the valve 25 may start to increase at the same time the CPU 63 commands the EGR valve 42 to close.

Therefore, the present examples and embodiments are to be considered as illustrative and not restrictive and the invention is not to be limited to the details given herein, but may be modified within the scope of the appended claims.

An apparatus for controlling an exhaust gas is disclosed. A recirculation device (40) includes an EGR passage (41) connecting an air exhaust passage (22) with an air intake passage (16) to control the exhaust gas flowing to the intake passage (16) by opening or closing an EGR valve (42) in the EGR passage (41) to suppress smoke caused by the exhaust gas. The apparatus includes a valve (25) disposed in the intake passage (16). The valve (25) controls the air flowing to the engine (11). The apparatus includes a speed sensor (56), a pressure sensor (59) and a gas pedal sensor (61) for detecting a driving status of the engine (11). The apparatus also includes an electronic control unit (39) for computing a target amount of the air to be supplied to the engine (11) based on the detected driving status of the engine (11). The apparatus further includes a vacuum pump (32) for controlling the intake restriction valve (25) to adjust the amount of the air based on the computed target amount. The electrical control unit (39) determines generation of the smoke based on the detected driving status of the engine (11) and corrects the amount of the air supplied to the engine (11). The electrical control unit (39) also controls the intake restriction valve (25) to increase the amount of the air with respect to the computed target amount for a predetermined time period after determining the generation of the smoke.

## Claims

1. An apparatus for controlling an exhaust gas recirculation system (40) in a diesel engine (11), said engine (11) communicating with an air exhaust passage (22) and an air intake passage (16), wherein said engine (11) combusts fuel with air supplied thereto through the air intake passage (16) and discharges exhaust gas produced by the fuel combustion through the air exhaust passage (22), and wherein said recirculation system (40) includes a recirculation passage (41) connecting said air exhaust passage (22) with said air intake passage (16) to control the exhaust gas flowing to the air intake passage (16) by selectively opening and closing a first control valve (42) disposed in the recirculation passage (41), whereby smoke produced by the exhaust gas is suppressed, said apparatus comprising:
a second control valve (25) disposed in the air intake passage (16) to control the air flowing to the engine (11);
means (56, 59, 61) for detecting a driving status of the engine (11);
means (39) for computing a target amount of the air to be supplied to the engine (11) based on the detected driving status of the engine (11);
means (34) for controlling the second control valve (25) to adjust the amount of the air based on the computed target amount;
means (39) for determining generation of the smoke based on the detected driving status of the engine (11); and
means (39) for correcting the amount of the air supplied to the engine (11), said correcting means controlling the second valve (25) to increase the amount of the air with respect to the computed target amount for a predetermined time period after the determining means has determined the generation of the smoke.

2. The apparatus as set forth in Claim 1, wherein said recirculation passage (41) allows a portion of the exhaust gas to flow from the air exhaust passage (22) to the air intake passage (16).

3. The apparatus as set forth in Claim 2 further comprising adjusting means (48) for adjusting an opening of the first control valve (42) to control an amount of the exhaust gas flowing through the recirculation passage (41).

4. The apparatus as set forth in Claim 3, wherein said correcting means includes means (39) for judging a decrease of engine speed.

5. The apparatus as set forth in Claim 4, wherein said correcting means and said adjusting means include an electric control unit (39) that outputs a duty signal, wherein said first control valve (42) and said second control valve (25) are electrically activated or deactivated by the duty signal.

6. The apparatus as set forth in Claim 5 further comprising:
a fuel injection nozzle (17) for injecting the fuel to the engine (11); and
a fuel supplying pump (18) for supplying the fuel to the fuel injection nozzle (17), said fuel supplying pump (18) being arranged to be electrically activated by the duty signal from the electric control unit (39).

7. The apparatus as set forth in Claim 6 further comprising:
means for computing a target amount of the fuel to be injected from the nozzle based on the driving state of the engine; and
means for gradually decreasing an actual amount of the fuel to be injected to the engine to the target amount when the judging means judges the decrease of the vehicle speed.

8. The apparatus as set forth in Claim 7 further comprising means (39) for correcting the amount of the air supplied to the engine (11), said correcting means controlling the second valve (25) to increase the amount of the air with respect to the computed target amount for a predetermined time period after the judging means has judged the decrease of the vehicle speed.

9. The apparatus as set forth in Claim 8 further comprising:
means (39) for stopping the recirculation of the exhaust gas; and
means (39) for correcting the amount of the air supplied to the engine (11), said correcting means controlling the second valve (25) to increase the amount of the air with respect to the computed target amount for a predetermined time period after the stopping means has stopped the recirculation of the exhaust gas.

10. An apparatus for controlling an exhaust gas recirculation system (40) in a diesel engine (11), said engine (11) communicating with an air exhaust passage (22) and an air intake passage (16), wherein a fuel injecting nozzle (17) injects fuel to said engine (11) that combusts fuel with air supplied thereto through the air intake passage (16) and discharges exhaust gas produced by the fuel combustion through the air exhaust passage (22), and wherein said recirculation system (40) includes a recirculation passage (41) connecting said air exhaust passage (22) with said air intake passage (16) to control the exhaust gas flowing to the air intake passage (16) by selectively opening and closing a first control valve (42) disposed in the recirculation passage (41), whereby smoke produced by the exhaust gas is suppressed, said apparatus including:
a second control valve (25) disposed in the air intake passage (16) to control the air flowing to the engine (11);
means (56, 59, 61) for detecting a driving status of the engine (11);
means (39) for computing a target amount of the air to be supplied to the engine (11) based on the detected driving status of the engine (11);
means (34) for controlling the second control valve (25) to adjust the amount of the air based on the computed target amount;
means (39) for determining generation of the smoke based on the detected driving status of the engine (11); and
means (39) for correcting an opening of the second control valve (25) to increase the amount of the air with respect to the computed target amount for a predetermined time period after the determining means (39) has determined the generation of the smoke.

11. The apparatus as set forth in Claim 10 further including adjusting means (48) for adjusting an opening of the first control valve (42) to control an amount of the exhaust gas flowing through the recirculation passage (41).

12. The apparatus as set forth in Claim 11, wherein said correcting means includes means (39) for judging a decrease of engine speed.

13. The apparatus as set forth in Claim 12 further comprising means (39) for calculating an fuel injection amount that optimizes the driving status of the engine (11).

14. The apparatus as set forth in Claim 13, wherein said correcting means, said calculating means and said adjusting means include an electric control unit (39) that outputs a duty signal, wherein said first control valve (42) and said second control valve (25) are electrically activated or deactivated by the duty signal.

15. The apparatus as set forth in Claim 14 further comprising a fuel supplying pump (18) for supplying the fuel to the fuel injection nozzle (17), said fuel supplying pump (18) having an electromagnetic spill valve (54) selectively activated and deactivated by the duty signal based on the calculated fuel injection amount.

16. An apparatus for controlling an exhaust gas recirculation system (40) in a diesel engine (11), said engine (11) communicating with an air exhaust passage (22) and an air intake passage (16), wherein said engine (11) combusts fuel with air supplied thereto through the air intake passage (16) and discharges exhaust gas produced by the fuel combustion through the air exhaust passage (22), and wherein said recirculation system (40) includes a recirculation passage (41) connecting said air exhaust passage (22) with said air intake passage (16) to control the exhaust gas flowing to the air intake passage (16) by selectively opening and closing a first control valve (42) disposed in the recirculation passage (41), whereby smoke produced by the exhaust gas is suppressed, said apparatus comprising:
a second control valve (25) disposed in the air intake passage (16) to control the air flowing to the engine (11);
detecting means (56, 59, 61) for detecting a driving status of the engine (11);
computing means (39) for computing a target amount of the air to be supplied to the engine (11) based on the detected driving status of the engine (11);
first control means (34) for controlling the second control valve (25) to adjust the amount of the air based on the computed target amount;
determining means (39) for determining generation of the smoke based on the detected driving status of the engine (11);
second control means (48) for controlling the first control valve (42), said second control means (48) selectively activating and deactivating the first control valve (42) based on the detected driving status of the engine (11); and
means (39) for correcting the amount of the air supplied to the engine (11), said correcting means (39) controlling the second control valve (25) to increase the amount of the air with respect to the computed target amount for a predetermined time period after the second control means (48) has deactivated the first control valve (42).

## Patentansprüche

1. Gerät zum Steuern eines Abgasrückführsystems (40) bei einem Dieselmotor (11), wobei der Motor mit einem Luftabgaskanal (22) und einem Luftansaugkanal (16) verbunden ist, wobei der Motor (11) Kraftstoff mit Luft verbrennt, die zugeführt wird über den Luftansaugkanal (16), und Abgas, das durch die Kraftstoffverbrennung erzeugt wird, über den Luftabgaskanal (22) abgibt, und wobei das Rückführsystem (40) einen Rückführkanal (41) umfasst, der den Luftabgaskanal (22) mit dem Luftansaugkanal (16) verbindet, um das zu dem Luftansaugkanal (16) strömende Abgas zu steuern durch wahlweises Öffnen oder Schließen eines ersten Steuerventils (42), das in dem Rückführkanal (41) angeordnet ist, wodurch durch das Abgas erzeugter Rauch unterdrückt wird, wobei das Gerät folgendes aufweist:
ein zweites Steuerventil (25), das in dem Luftansaugkanal (16) angeordnet ist, um die zu dem Motor (11) strömende Luft zu steuern;
eine Einrichtung (56, 59, 61) zum Erfassen eines Antriebszustands des Motors (11);
eine Einrichtung (39) zum Berechnen einer Sollluftmenge, die zu dem Motor (11) zugeführt werden soll, auf der Grundlage des erfassten Antriebszustands des Motors(11);
eine Einrichtung (34) zum Steuern des zweiten Steuerventils (25) zum Einstellen der Luftmenge auf der Grundlage der berechneten Sollmenge;
eine Einrichtung (39) zum Ermitteln des Erzeugens des Rauchs auf der Grundlage des erfassten Antriebszustands des Motors (11); und
eine Einrichtung (39) zum Korrigieren der zu dem Motor (11) zugeführten Luftmenge, wobei die Korrektureinrichtung das zweite Ventil (25) steuert, um die Luftmenge bezüglich der berechneten Sollmenge zu erhöhen für eine vorgegebene Zeit nachdem die Ermittlungseinrichtung die Erzeugung des Rauchs ermittelt hat.

2. Gerät nach Anspruch 1, wobei der Rückführkanal (41) ermöglicht, dass ein Teil des Abgases von dem Luftabgaskanal (22) zu dem Luftansaugkanal (16) strömt.

3. Gerät nach Anspruch 2, das des weiteren eine Einstelleinrichtung (48) aufweist zum Einstellen einer Öffnung des ersten Steuerventils (42), um eine Abgasmenge zu steuern, die durch den Rückführkanal (41) hindurchströmt.

4. Gerät nach Anspruch 3, wobei die Korrektureinrichtung eine Einrichtung (39) umfasst zum Beurteilen einer Abnahme der Motordrehzahl.

5. Gerät nach Anspruch 4, wobei die Korrektureinrichtung und die Einstelleinrichtung eine elektronische Steuereinheit (39) umfassen, die ein Zyklussignal abgibt, wobei das erste Steuerventil (42) und das zweite Steuerventil (25) elektrisch aktiviert oder deaktiviert werden durch das Zyklussignal.

6. Gerät nach Anspruch 5, das des weiteren folgendes aufweist:
eine Kraftstoffeinspritzdüse (17) zum Einspritzen des Kraftstoffs in den Motor (11) hinein, und
eine Kraftstoffzufuhrpumpe (18) zum Zuführen des Kraftstoffs zu der Kraftstoffeinspritzdüse (17), wobei die Kraftstoffzufuhrpumpe (18) angeordnet ist, um elektrisch aktiviert zu werden durch das Zyklussignal von der elektronischen Steuereinheit (39).

7. Gerät nach Anspruch 6, das des weiteren folgendes aufweist:
eine Einrichtung zum Berechnen einer Sollkraftstoffmenge, die von der Düse eingespritzt werden soll auf der Grundlage des Antriebszustands des Motors; und
eine Einrichtung zum graduellen Vermindern einer Istkraftstoffmenge, die in den Motor eingespritzt werden soll, auf die Sollmenge, wenn die Beurteilungseinrichtung die Abnahme der Fahrzeuggeschwindigkeit beurteilt.

8. Gerät nach Anspruch 7, das des weiteren eine Einrichtung (39) umfasst zum Korrigieren der zu dem Motor (11) zugeführten Luftmenge, wobei die Korrektureinrichtung das zweite Ventil (25) steuert, um die Luftmenge bezüglich der berechneten Sollmenge für eine vorgegebene Zeitperiode zu erhöhen nachdem die Beurteilungseinrichtung die Abnahme der Fahrzeuggeschwindigkeit beurteilt hat.

9. Gerät nach Anspruch 8, das des weiteren folgendes aufweist:
eine Einrichtung (39) zum Anhalten der Rückführung des Abgases; und
eine Einrichtung (39) zum Korrigieren der zu dem Motor (11) zugeführten Luftmenge, wobei die Korrektureinrichtung das zweite Ventil (25) steuert, um die Luftmenge bezüglich der berechneten Sollmenge für eine vorgegebene Zeitperiode zu erhöhen nachdem die Anhalteeinrichtung die Rückführung des Abgases angehalten hat.

10. Gerät zum Steuern eines Abgasrückführsystems (40) in einem Dieselmotor (11), wobei der Motor (11) mit einem Luftabgaskanal (22) und einem Luftansaugkanal (16) verbunden ist, wobei eine Kraftstoffeinspritzdüse (17) Kraftstoff in den Motor (11) hinein einspritzt, der Kraftstoff mit Luft verbrennt, die durch den Luftansaugkanal (16) zugeführt wird, und das durch die Kraftstoffverbrennung erzeugte Abgas abgibt über den Luftabgaskanal (22), und wobei das Rückführsystem (40) einen RÜckführkanal (41) umfasst, der den Luftabgaskanal (22) mit dem Luftansaugkanal (16) verbindet, um das zu dem Luftansaugkanal (16) strömende Abgas zu steuern durch wahlweises Öffnen oder Schließen eines ersten Steuerventils (42), das in dem Rückführkanal (41) angeordnet ist, wodurch durch das Abgas erzeugter Rauch unterdrückt wird, wobei das Gerät folgendes umfasst:
ein zweites Steuerventil (25), das in dem Luftansaugkanal (16) angeordnet ist zum Steuern der zu dem Motor (11) strömenden Luft;
eine Einrichtung (56, 59, 61) zum Erfassen eines Antriebszustands des Motors (11);
eine Einrichtung (39) zum Berechnen einer Sollluftmenge, die zu dem Motor (11) zugeführt werden soll auf der Grundlage des erfassten Antriebszustands des Motors (11);
eine Einrichtung (34) zum Steuern des zweiten Steuerventils (25) zum Einstellen der Luftmenge auf der Grundlage der berechneten Sollmenge;
eine Einrichtung (39) zum Ermitteln des Erzeugens des Rauchs auf der Grundlage des erfassten Antriebszustands des Motors (11); und
eine Einrichtung (39) zum Korrigieren einer Öffnung des zweiten Steuerventils (25), um die Luftmenge zu erhöhen bezüglich der berechneten Sollmenge für eine vorgegebene Zeitperiode nachdem die Ermittlungseinrichtung (39) die Erzeugung des Rauchs ermittelt hat.

11. Gerät nach Anspruch 10, das des weiteren eine Einstelleinrichtung (48) umfasst zum Einstellen einer Öffnung des ersten Steuerventils (42), um eine Abgasmenge zu steuern, die durch den Rückführkanal (41) hindurch strömt.

12. Gerät nach Anspruch 11, wobei die Korrektureinrichtung eine Einrichtung (39) umfasst zum Beurteilen einer Abnahme der Motordrehzahl.

13. Gerät nach Anspruch 12, das des weiteren eine Einrichtung (39) aufweist zum Berechnen einer Kraftstoffeinspritzmenge, die den Antriebszustand des Motors (11) optimiert.

14. Gerät nach Anspruch 13, wobei die Korrektureinrichtung, die Berechnungseinrichtung und die Einstelleinrichtung eine elektronische Steuereinheit (39) umfassen, die ein Zyklussignal abgibt, wobei das erste Steuerventil (42) und das zweite Steuerventil (25) elektrisch aktiviert oder deaktiviert werden durch das Zyklussignal.

15. Gerät nach Anspruch 14, das des weiteren eine Kraftstoffzufuhrpumpe (18) aufweist zum Zuführen des Kraftstoffs zu der Kraftstoffeinspritzdüse (17), wobei die Kraftstoffzufuhrpumpe (18) ein elektromagnetisches Überlaufventil (54) hat, das wahlweise aktiviert oder deaktiviert wird durch das Zyklussignal auf der Grundlage der berechneten Kraftstoffeinspritzmenge.

16. Gerät zum Steuern eines Abgasrückführsystems (40) bei einem Dieselmotor (11), wobei der Motor (11) mit einem Luftabgaskanal (22) und einem Luftansaugkanal (16) verbunden ist, wobei der Motor (11) Kraftstoff mit Luft verbrennt, die zugeführt wird durch den Luftansaugkanal (16), und durch die Kraftstoffverbrennung erzeugtes Abgas abgibt über den Luftabgaskanal (22), und wobei das Rückführsystem (40) einen Rückführkanal (41) umfasst, der den Luftabgaskanal (22) mit dem Luftansaugkanal (16) verbindet, um das zu dem Luftansaugkanal (16) strömende Abgas zu steuern durch wahlweises Öffnen oder Schließen eines ersten Steuerventils (42), das in dem Rückführkanal (41) angeordnet ist, wodurch durch das Abgas erzeugter Rauch unterdrückt wird, wobei das Gerät folgendes aufweist:
ein zweites Steuerventil (25), das in dem Luftansaugkanal (16) angeordnet ist, um die zu dem Motor (11) strömende Luft zu steuern;
eine Erfassungseinrichtung (56, 59, 61) zum Erfassen eines Antriebszustands des Motors (11);
eine Berechnungseinrichtung (39) zum Berechnen einer Sollluftmenge, die zu dem Motor (11) zugeführt werden soll auf der Grundlage des erfassten Antriebszustands des Motors (11);
eine erste Steuereinrichtung (34) zum Steuern des zweiten Steuerventils (25), um die Luftmenge auf der Grundlage der berechneten Sollmenge einzustellen;
eine Ermittlungseinrichtung (39) zum Ermitteln des Erzeugens des Rauchs auf der Grundlage des erfassten Antriebszustands des Motors (11);
eine zweite Steuereinrichtung (48) zum Steuern des ersten Steuerventils (42), wobei die zweite Steuereinrichtung (48) wahlweise das erste Steuerventil (42) aktiviert oder deaktiviert auf der Grundlage des erfassten Antriebszustands des Motors (11); und
eine Einrichtung (39) zum Korrigieren der zu dem Motor (11) zugeführten Luftmenge, wobei die Korrektureinrichtung (39) das zweite Steuerventil (25) steuert zum Erhöhen der Luftmenge bezüglich der berechneten Sollmenge für eine vorgegebene Zeitperiode nachdem die zweite Steuereinrichtung (48) das erste Steuerventil (42) deaktiviert hat.

## Revendications

1. Un appareil destiné à réguler un système de recirculation de gaz d'échappement (40) dans un moteur diesel (11), ledit moteur (11) communicant avec un passage d'échappement d'air (22) et un passage d'admission d'air (16), dans lequel ledit moteur (11) brûle du carburant avec de l'air délivré dans ce dernier par l'intermédiaire du passage d'admission d'air (16) et décharge un gaz d'échappement produit par la combustion du carburant par l'intermédiaire du passage d'échappement d'air (22), et dans lequel ledit système de recirculation (40) comprend un passage de recirculation (41) reliant ledit passage d'échappement d'air (22) audit passage d'admission d'air (16) de manière à réguler la circulation de gaz d'échappement vers le passage d'admission d'air (16) en ouvrant et fermant de manière sélective une première soupape de contrôle (42) disposée dans le passage de recirculation (41), moyennant quoi de la fumée produite par le gaz d'échappement est supprimée, ledit appareil comprenant :
une seconde soupape de contrôle (25) disposée dans le passage d'admission d'air (16) destinée à réguler la circulation d'air vers le moteur (11) ;
des moyens (56, 59, 61) destinés à détecter un état d'entraînement du moteur (11) ;
des moyens (39) destinés à calculer une quantité cible de l'air à délivrer dans le moteur (11) en se basant sur l'état d'entraînement détecté du moteur (11) ;
des moyens (34) destinés à commander la seconde soupape de contrôle (25) de manière à régler la quantité de l'air basée sur la quantité cible calculée ;
des moyens (39) destinés à déterminer une production de la fumée basée sur l'état d'entraînement détecté du moteur (11) ; et
des moyens (39) destinés à corriger la quantité de l'air délivré au moteur (11), lesdits moyens de correction commandant la seconde soupape (25) de manière à augmenter la quantité de l'air par rapport à la quantité cible calculée pour une période de temps prédéterminée une fois que les moyens de détermination ont déterminé la production de la fumée.

2. L'appareil selon la revendication 1, dans lequel ledit passage de recirculation (41) permet à une partie du gaz d'échappement de circuler du passage d'échappement d'air (22) au passage d'admission d'air (16).

3. L'appareil selon la revendication 2 comprenant en outre des moyens de réglage (48) destinés à régler une ouverture de la première soupape de contrôle (42) de manière à réguler une quantité du gaz d'échappement circulant à travers le passage de recirculation (41).

4. L'appareil selon la revendication 3, dans lequel lesdits moyens de correction comprennent des moyens (39) destinés à estimer une réduction de vitesse du moteur.

5. L'appareil selon la revendication 4, dans lequel lesdits moyens de correction et lesdits moyens de réglage comprennent une unité de contrôle électrique (39) qui délivre un signal de marche, dans lequel ladite première soupape de contrôle (42) et ladite seconde soupape de contrôle (25) sont électriquement activées ou désactivées par le *signal de marche*.

6. L'appareil selon la revendication 5 comprenant en outre :
une buse d'injection de carburant (17) destinée à injecter le carburant dans le moteur (11), et
une pompe d'alimentation en carburant (18) destinée à délivrer le carburant dans la buse d'injection de carburant (17), ladite pompe d'alimentation en carburant (18) étant agencée pour être électriquement activée par le signal de marche provenant de l'unité de contrôle électrique (39).

7. L'appareil selon la revendication 6 comprenant en outre :
des moyens destinés à calculer une quantité cible du carburant à injecter à partir de la buse en se basant sur l'état d'entraînement du moteur ; et
des moyens destinés à diminuer progressivement une quantité réelle du carburant à injecter dans le moteur pour obtenir la quantité cible lorsque les moyens d'estimation *estiment* la réduction de la vitesse du véhicule.

8. L'appareil selon la revendication 7 comprenant en outre des moyens (39) destinés à corriger la quantité de l'air délivré dans le moteur (11), lesdits moyens de correction commandant la seconde soupape (25) pour augmenter la quantité de l'air par rapport à la quantité cible calculée pour une période de temps prédéterminée après que les moyens d'estimation ont estimé la réduction de la vitesse du véhicule.

9. L'appareil selon la revendication 8 comprenant en outre :
des moyens (39) destinés à arrêter la recirculation du gaz d'échappement ; et
des moyens (39) destinés à corriger la quantité de l'air délivré dans le moteur (11), lesdits moyens de correction commandant la seconde soupape (25) de manière à augmenter la quantité de l'air par rapport à la quantité cible calculée pour une période de temps prédéterminée après que les moyens d'arrêt ont arrêté la recirculation du gaz d'échappement.

10. Un appareil destiné à réguler un système de recirculation de gaz d'échappement (40) dans un moteur diesel (11), ledit moteur (11) communicant avec un passage d'échappement d'air (22) et un passage d'admission d'air (16), dans lequel une buse d'injection de carburant (17) injecte du carburant dans ledit moteur (11) qui brûle du carburant avec de l'air délivré dans ce dernier par l'intermédiaire du passage d'admission d'air (16) et qui décharge un gaz d'échappement produit par la combustion du carburant par l'intermédiaire du passage d'échappement d'air (22), et dans lequel ledit système de recirculation (40) comprend un passage de recirculation (41) reliant ledit passage d'échappement d'air (22) audit passage d'admission d'air (16) de manière à réguler la circulation de gaz d'échappement vers le passage d'admission d'air (16) en ouvrant et fermant de manière sélective une première soupape de contrôle (42) disposée dans le passage de recirculation (41), moyennant quoi de la filmée produite par le gaz d'échappement est supprimée, ledit appareil comprenant :
une seconde soupape de contrôle (25) disposée dans le passage d'admission d'air (16) destinée à réguler la circulation d'air vers le moteur (11) ;
des moyens (56, 59, 61) destinés à détecter un état d'entraînement du moteur (11) ;
des moyens (39) destinés à calculer une quantité cible de l'air à délivrer dans le moteur (11) en se basant sur l'état d'entraînement détecté du moteur (11) ;
des moyens (34) destinés à commander la seconde soupape de contrôle (25) de manière à régler la quantité de l'air basée sur la quantité cible calculée ;
des moyens (39) destinés à déterminer une production de la fumée basée sur l'état d'entraînement détecté du moteur (11) ; et
des moyens (39) destinés à corriger une ouverture de la seconde soupape de contrôle (25) de manière à augmenter la quantité de l'air par rapport à la quantité cible calculée pour une période de temps prédéterminée une fois que les moyens de détermination (39) ont déterminé la production de la fumée.

11. L'appareil selon la revendication 10 comprenant en outre des moyens de réglage (48) destinés à régler une ouverture de la première soupape de contrôle (42) de manière à réguler une quantité du gaz d'échappement circulant à travers le passage de recirculation (41).

12. L'appareil selon la revendication 11, dans lequel lesdits moyens de correction comprennent des moyens (39) destinés à estimer une réduction de la vitesse du moteur.

13. L'appareil selon la revendication 12 comprenant en outre des moyens (39) destinés à calculer une quantité d'injection de carburant qui optimise l'état d'entraînement du moteur (11).

14. L'appareil selon la revendication 13, dans lequel lesdits moyens de correction, lesdits moyens de calcul et lesdits moyens de réglage comprennent une unité de contrôle électrique (39) qui délivre un signal de marche, dans lequel ladite première soupape de contrôle (42) et ladite seconde soupape de contrôle (25) sont électriquement activées ou désactivées par le signal de marche.

15. L'appareil selon la revendication 14 comprenant en outre une pompe d'alimentation en carburant (18) pour délivrer le carburant dans la buse d'injection de carburant (17), ladite pompe d'alimentation en carburant (18) possédant une soupape de décharge électromagnétique (54) activée et désactivée de manière sélective par le signal de marche en se basant sur la quantité d'injection de carburant calculée.

16. Un appareil destiné à réguler un système de recirculation de gaz d'échappement (40) dans un moteur diesel (11), ledit moteur (11) communiquant avec un passage d'échappement d'air (22) et un passage d'admission d'air (16), dans lequel ledit moteur (11) brûle du carburant avec de l'air délivré dans ce dernier par l'intermédiaire du passage d'admission d'air (16) et décharge un gaz d'échappement produit par la combustion du carburant par l'intermédiaire du passage d'échappement d'air (22), et dans lequel ledit système de recirculation (40) comprend un passage de recirculation (41) reliant ledit passage d'échappement d'air (22) audit passage d'admission d'air (16) de manière à réguler la circulation de gaz d'échappement vers le passage d'admission d'air (16) en ouvrant et fermant de manière sélective une première soupape de contrôle (42) disposée dans le passage de recirculation (41), moyennant quoi de la fumée produite par le gaz d'échappement est supprimée, ledit appareil comprenant :
une seconde soupape de contrôle (25) disposée dans le passage d'admission d'air (16) destinée à réguler la circulation d'air vers le moteur (11) ;
des moyens de détection (56, 59, 61) destinés à détecter un état d'entraînement du moteur (11) ;
des moyens de calcul (39) destinés à calculer une quantité cible de l'air à délivrer dans le moteur (11) en se basant sur l'état d'entraînement détecté du moteur (11) ;
des premiers moyens de commande (34) destinés à commander la seconde soupape de contrôle (25) de manière à réguler la quantité de l'air basée sur la quantité cible calculée ;
des moyens de détermination (39) destinés à déterminer une production de la fumée basée sur l'état d'entraînement détecté du moteur (11) ;
des seconds moyens de commande (48) destinés à commander la première soupape de contrôle (42), lesdits seconds moyens de commande (48) activant et désactivant de manière sélective la première soupape de contrôle (42) en se basant sur l'état d'entraînement détecté du moteur (11) ; et
des moyens (39) destinés à corriger la quantité de l'air délivré dans le moteur (11), lesdits moyens de correction (39) commandant la seconde soupape de contrôle (25) de manière à augmenter la quantité de l'air par rapport à la quantité cible calculée pour une période de temps prédéterminée une fois que les seconds moyens de commande (48) ont désactivé la première soupape de contrôle (42).
